(19) Europäisches Patentamt
European Patent Office
Office européen des brevets

(11) **EP 0 755 422 B1**

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(21) Anmeldenummer: **95914327.2**

(22) Anmeldetag: **29.03.1995**

(51) Int Cl.6: **C09D 151/06**, C08F 255/00

(86) Internationale Anmeldenummer:
**PCT/EP95/01178**

(87) Internationale Veröffentlichungsnummer:
**WO 95/28453 (26.10.1995 Gazette 1995/46)**

(54) **WASSERVERDÜNNBARE BINDEMITTEL, WÄSSRIGE LACKE, DIE DIESE BINDEMITTEL ENTHALTEN, UND VERFAHREN ZUR GRUNDIERUNG ODER EINSCHICHTIGEN LACKIERUNG VON KUNSTSTOFFEN**

WATER-DILUTABLE BINDERS, AQUEOUS PAINTS CONTAINING THEM AND PROCESS FOR PRIMING OR ONE-COAT PAINTING PLASTICS

LIANTS DILUABLES DANS L'EAU, PEINTURES AQUEUSES LES CONTENANT, ET PROCEDE D'APPLICATION D'UNE COUCHE DE FOND OU D'UNE SEULE COUCHE DE PEINTURE SUR DES MATIERES PLASTIQUES

(84) Benannte Vertragsstaaten:
**AT BE CH DE DK ES FR GB IT LI NL SE**

(30) Priorität: **13.04.1994 DE 4412655**

(43) Veröffentlichungstag der Anmeldung:
**29.01.1997 Patentblatt 1997/05**

(73) Patentinhaber: **BASF Coatings Aktiengesellschaft**
**48165 Münster (DE)**

(72) Erfinder:
• **HINTZE-BRÜNING, Horst**
**D-48165 Münster (DE)**
• **BORGHOLTE, Harald**
**D-48151 Münster (DE)**
• **BERGER, Albin**
**D-67273 Bobenheim am Berg (DE)**
• **MÜLLER, Michael-Wolfgang**
**D-68647 Biblis (DE)**
• **OSLOWSKI, Hans-Josef**
**D-48163 Münster (DE)**

(56) Entgegenhaltungen:
**EP-A- 0 369 604**

• **DATABASE WPIL, no. 92-353 554, DERWENT PUBLICATIONS LTD., London; & JP,A,04 255 704 (TOYO INK MFG CO.),**
• **DATABASE WPIL, no. 93-088 696, DERWENT PUBLICATIONS LTD., London; & JP,A,05 327 737 (TOATSU CHEM INC.),**

**Beschreibung**

Die Erfindung betrifft wasserverdünnbare Bindemittel, wäßrige Lacke, die diese Bindemittel enthalten und Verfahren zur Grundierung oder einschichtigen Lackierung von Kunststoffen.

Um bei der Lackierung von Kunststoffen eine befriedigende Haftung der applizierten Lackschicht bzw. der applizierten Lackschichten zu erreichen, muß die Kunststoffoberfläche beispielsweise durch Beflammen, Coronabehandlung, Plasmabehandlung oder Beizen mit Chromschwefelsäure und/oder Grundieren mit speziellen Lacken vorbehandelt werden.

Vorbehandlungsverfahren wie Beflammen, Coronabehandlung, Plasmabehandlung oder Beizen mit Chromschwefelsäure sind mit technischem Aufwand verbunden und/oder sollten aus ökologischen Gründen vermieden werden.

Zum Grundieren von Kunststoffen auf Basis von Polypropylen werden üblicherweise Lacke eingesetzt, die nachteiligerweise halogenhaltige Bindemittel enthalten (vgl. beispielsweise JP-A-256 556/1989).

In der EP-A-468 644 werden Lacke beschrieben, die auch zur Grundierung von Kunststoffen geeignet sein sollen. Zur Herstellung der in diesen Lacken eingesetzten Bindemittel werden jedoch nur schwer zugängliche Monomere benötigt.

Die der vorliegenden Erfindung zugrundeliegende technische Aufgabenstellung besteht in der Bereitstellung von wasserverdünnbaren Bindemitteln und wäßrigen Lacken, die diese Bindemittel enthalten und die in Verfahren zur Grundierung oder einschichtigen Lackierung von Kunststoffen einsetzbar sind.

Diese Aufgabe wird überraschenderweise durch die Bereitstellung von wasserverdünnbaren Bindemitteln gelöst, die dadurch gekennzeichnet sind, daß sie herstellbar sind, indem

(A) 20 bis 90 Gew.%, vorzugsweise 55 bis 85 Gew% einer Mischung aus

(a1) 3 bis 50 Gew.%, vorzugsweise 5 bis 15 Gew.% Acrylsäure, Methacrylsäure oder einer Mischung aus Acrylsäure und Methacrylsäure und

(a2) 50 bis 97 Gew.%, vorzugsweise 85 bis 95 Gew.% eines ethylenisch ungesättigten Monomeren oder einer Mischung aus ethylenisch ungesättigten Monomeren,

in Gegenwart von

(B) 9,9 bis 79,9 Gew.%, vorzugsweise 15 bis 45 Gew.% eines halogenfreien Polyolefins oder einer Mischung aus halogenfreien Polyolefinen und

(C) 0,1 bis 10 Gew.%, vorzugsweise 1 bis 7 Gew.% eines Radikalbildners oder einer Mischung aus Radikalbildnern

radikalisch polymerisiert werden und das erhaltene Polymerisationsprodukt nach Neutralisation von mindestens 20% der in dem Polymerisationsprodukt enthaltenen Carboxylgruppen in Wasser dispergiert wird, wobei die Summe der Gewichtsprozentangaben für die Komponenten (A), (B) und (C) sowie (a1) und (a2) jeweils stets 100 Gew.% ergibt und die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH, -NR$_3$, -CN, -CONH$_2$, -CO-,- NHCONH-, -OCONH-, -OPO$_3$H, -OSO$_3$H, -R-O-R-, vorzugsweise -COOH, -CN, -CNH$_2$ und -R-O-R, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe, vorzugsweise Cyclohexyl- und Isobornylgruppe.

Wäßrige Lacke, die diese Bindemittel enthalten, sind in Verfahren zur Grundierung oder einschichtigen Lackierung von Kunststoffen, insbesondere von Kunststoffen auf Basis von Polypropylen bzw. Copolymeren aus Propylen und copolymerisierbaren Monomeren, wie z. B. Ethylen, einsetzbar und zeichnen sich dadurch aus, daß sie Lackschichten liefern, die auf vorbehandelten und unvorbehandelten Kunststoffsubstraten sehr gut haften.

Die zur Herstellung der erfindungsgemäßen wasserverdünnbaren Bindemittel eingesetzte Mischung (A) besteht aus

(a1) 3 bis 50 Gew.%, vorzugsweise 5 bis 15 Gew.% Acrylsäure, Methacrylsäure oder einer Mischung aus Acrylsäure und Methacrylsäure und

(a2) 50 bis 97 Gew.%, vorzugsweise 85 bis 95 Gew.% eines ethylenisch ungesättigten Monomeren oder einer Mischung aus ethylenisch ungesättigten Monomeren,

wobei die Summe der Gewichtsprozentangaben für die Komponenten (a1) und (a2) stets 100 Gew.% ergibt und die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH, -$NR_3$, -CN, -$CONH_2$, -CO-, -NHCONH-, -OCONH-, -$OPO_3H$, -$OSO_3H$, -R-O-R-, vorzugsweise -COOH, -CN, -$CNH_2$ und -R-O-R-, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe, vorzugsweise Cyclohexyl- und Isobornylgruppe.

Da die Glasübergangstemperaturen von aus ethylenisch ungesättigten Monomeren hergestellten Polymeren nach der Gleichung

$$1/Tg = \Sigma\ W_n/Tg_n$$

$Tg$ = Glasübergangstemperatur des Copolymers in °K
$W_n$ = Gewichtsanteil des n-ten Monomers
$T_{gn}$ = Glasübergangstemperatur des Homopolymers aus dem n-ten Monomer

berechnet werden kann und ethylenisch ungesättigte Monomere, die -COOH, -OH, -$NR_3$, -CN, -$CONH_2$, -CO-, -NHCONH-, -OCONH-, -$OPO_3H$, -$OSO_3H$ , -R-O-R- (wobei R für einen organischen Rest steht, vorzugsweise für einen Alkyl- bzw. Alkylenrest mit 1 bis 6 C-Atomen), Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- oder Bicyclododecylgruppen enthalten, im Handel erhältlich sind, kann der Fachmann die Zusammensetzung der Mischung aus den Komponenten (a1) und (a2) ohne Schwierigkeiten so auswählen, daß bei alleiniger Polymerisation der Mischung aus (a1) und (a2) ein Polymer erhalten wird, das

- eine Glasübergangstemperatur von 0 bis 150, vorzugsweise 10 bis 80°C aufweist,

- 0,04 bis 1,0, vorzugsweise 0,1 bis 0,5 Milliäquivalente einer oder mehrerer der folgenden funktionellen Gruppen enthält: -COOH, -OH-, -$NR_3$, -CN, -$CONH_2$, -CO-,- NHCONH-, -OCONH-, -$OPO_3H$, -$OSO_3H$, -R-O-R-, vorzugsweise -COOH, -CN, -$CNH_2$ und -R-O-R-, wobei R für einen organischen Rest steht, vorzugsweise für einen Alkyl- bzw. Alkylenrest mit 1 bis 6 C-Atomen, und

- das zu 0 bis 50, vorzugsweise 5 bis 25 Gew.% aus einer oder mehreren der folgenden cycloaliphatischen Gruppen, die mit mindestens einer Alkylgruppe, die 1 bis 12, vorzugsweise 1 bis 6 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe, vorzugsweise Cyclohexyl- und Isobornylgruppe.

Unter Berücksichtigung der oben beschriebenen Auswahlkriterien können als Komponente (a2) beispielsweise eingesetzt werden: Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl-, Isobornyl-, Cyclohexyl- und tert-Butylcyclohexylacrylat oder -methacrylat, Hydroxyalkylester der Acrylsäure, Methacrylsäure oder einer anderen $\alpha,\beta$-ethylenisch ungesättigten Carbonsäure, wie z.B. 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat oder 4-Hydroxybutylmethacrylat, entsprechende Ester von anderen ethylenisch ungesättigten Säuren mit bis zu 6 C-Atomen im Molekül, wie z.B. Ethacrylsäure und Crotonsäure, Acrylamidomethylpropansulfonsäure, vinylaromatische Kohlenwasserstoffe, wie z.B. Styrol, $\alpha$-Alkylstyrol und Vinyltoluol, amidgruppenhaltige Monomere, wie z.B. Acrylamid, Methacrylamid, N-Methylolacrylamid und N-Methylolmethacrylamid und nitrilgruppenhaltige Monomere, wie z.B. Acryl- und Methacrylnitril oder Gemische aus den genannten Monomeren.

Als Komponente (B) wird ein halogenfreies Polyolefin, vorzugsweise ein Homopolymer von Propylen oder ein Copolymer von Propylen und mindestens einem Comonomer, wie z.B. Ethylen, Butylen oder Isopren, oder eine Mischung aus solchen Polyolefinen eingesetzt. Besonders bevorzugt wird ein Homopolymer von Propylen mit einem gewichtsmittleren Molekulargewicht von 1000 bis 100000, vorzugsweise 5000 bis 50000 (gelpermeationschromatographisch bestimmt unter Verwendung eines Polypropylenstandards) und einer Jodzahl von bis zu 0,3, vorzugsweise 0,005 bis 0,05 mgJ$_2$/g oder ein Copolymer von Propylen und Ethylen, das zu höchstens 20 Gew.% aus Ethyleneinheiten besteht, ein zahlenmittleres Molekulargewicht von 1000 bis 100000, vorzugsweise 5000 bis 50000 (gelpermeationschromatographisch bestimmt unter Verwendung eines Polypropylenstandards) und eine Jodzahl von bis zu 0,3, vorzugsweise 0,005 bis 0,05 mgJ$_2$/g aufweist oder eine Mischung aus diesen Polymeren als Komponente (B) eingesetzt. Die eingesetzten Polypropylenhomopolymere sollten vorzugsweise isotaktisch sein. Die als Komponente (B) eingesetzten Polyolefine können mit Maleinsäureanhydrid einer Pfropfreaktion unterworfen worden sein, bevorzugt werden jedoch maleinsäureanhydridgruppenfreie Polyolefine eingesetzt. Halogenfreie Polyolefine der oben beschriebenen Art sind im Handel beispielsweise von den Firmen BASF AG, EASTMAN, ELF-ATOCHEM und SANYO erhältlich.

Zur Herstellung der erfindungsgemäßen wasserverdünnbaren Bindemittel werden 20 bis 90 Gew.%, vorzugsweise 55 bis 85 Gew% der Mischung (A) in Gegenwart von 9,9 bis 79,9 Gew.%, vorzugsweise 15 bis 45 Gew.% der Komponente (B) und 0,1 bis 10 Gew.%, vorzugsweise 1 bis 7 Gew.% der Komponente (C) radikalisch polymerisiert, und das erhaltene Polymerisationsprodukt wird nach Neutralisation von mindestens 20% der im Polymerisationsprodukt enthaltenen Carboxylgruppen in Wasser dispergiert. Die Summe der Gewichtsprozentangaben für die Komponenten (A), (B) und (C) ergibt stets 100 Gew.%.

Die Polymerisation der Mischung (A) in Gegenwart der Komponenten (B) und (C) kann in Substanz, in wäßriger Emulsion oder in einem organischen Lösemittel bzw. einer Mischung aus organischen Lösemitteln durchgeführt werden. Die Polymerisation wird vorzugsweise in einem organischen Lösemittel oder einer Mischung aus organischen Lösemitteln, insbesondere in unpolaren Lösemitteln mit einem Siedebereich zwischen 120 bis 200, vorzugweise 135 bis 190 °C bei Polymerisationstemperaturen von 120 bis 200°C, vorzugsweise 130 bis 160°C durchgeführt.

Als Komponente (C) können im Prinzip alle bekannten Radikalbildner eingesetzt werden. Es werden vorzugsweise solche Radikalbildner eingesetzt, die bei der Polymerisationstemperatur eine Halbwertszeit aufweisen, die zwischen 15 und 180 Minuten liegt. Als Beispiele für einsetzbare Radikalbildner werden genannt: Dialkylperoxide, wie z.B. Dicumylperoxid und Di-tert.-butylperoxid, Peroxyester, wie z.B. tert. Butylperoxybenzoat, tert. Butylperoxyoctanoat, tert. Butylperoxyacetat und tert. Butylperoxyisobutyrat, Diacylperoxide, wie z.B. Benzoylperoxid und Acetylperoxid sowie Azoverbindungen, wie z.B. Azo-bis-(isobutyronitril).

Zur Neutralisation des Polymerisationsproduktes werden vorzugsweise organische Amine, insbesondere tertiäre Amine, wie z.B Dimethylethanolamin eingesetzt.

Unter Verwendung der erfindungsgemäßen Bindemittel können nach dem Fachmann gut bekannten Methoden wäßrige Lacke hergestellt werden, die zur Grundierung oder einschichtigen Lackierung von Kunststoffen, insbesondere von Kunststoffen auf Basis von Polypropylen bzw. Copolymeren aus Propylen und copolymerisierbaren Monomeren, wie z. B. Ethylen, einsetzbar sind und mit denen Lackschichten herstellbar sind, die auf vorbehandelten und unvorbehandelten Kunststoffsubstraten sehr gut haften. Die erfindungsgemäßen Bindemittel können auch in Basislacken zur Herstellung von mehrschichtigen Lackierungen des "basecoat-clearcoat"-Typs eingesetzt werden.

Die unter Verwendung der erfindungsgemäßen Bindemittel hergestellten wäßrigen Lacke können neben den erfindungsgemäßen Bindemitteln auch noch weitere verträgliche Kunstharze, wie z.B. Polyacrylatharze, Polyesterharze und Polyurethanharze (vgl. beispielsweise DE-A-42 39 695) und Vernetzungsmittel wie z. B. Aminoplastharze und/oder ggf. blockierte Polyisocyanate enthalten. Beim Einsatz von unblockierten Polyisocyanaten ist es in der Regel zweckmäßig, die wäßrigen Lacke als Zweikomponentensystem zu lagern.

Die unter Verwendung der erfindungsgemäßen Bindemittel hergestellten wäßrigen Lacke können sowohl ohne als auch mit Pigmenten bzw. Füllstoffen formuliert werden. Sie können auch in sehr dünnen Schichtdicken (5 bis 10 μm) appliziert werden.

Die unter Verwendung der erfindungsgemäßen Bindemittel hergestellten wäßrigen Lacke enthalten im applikationsfertigen Zustand in der Regel 30 bis 80, vorzugsweise 45 bis 70 Gew.-% Wasser, 0 bis 50, vorzugsweise 0 bis 10 Gew.-% organische Lösemittel, 6 bis 70, vorzugsweise 15 bis 45 Gew.-% des erfindungsgemäßen Bindemittels, 0 bis 40, vorzugsweise 0 bis 25 Gew.-% Pigmente und/oder Füllstoffe und 0 bis 10 Gew.-% sonstige Zusätze, wie z.B. Katalysatoren, Verdickungsmittel, Verlaufsmittel usw., wobei die Gewichtsprozentangaben auf die Gesamtrezeptur der Lacke im applikationsfertigen Zustand (d.h. z.B. bei Spritzviskosität) bezogen sind.

Mit den unter Verwendung der erfindungsgemäßen Bindemittel hergestellten wäßrigen Lacken können Kunststoffe wie z. B. ABS, AMMA, ASA, CA, CAB, EP, UF, CF, MF, MPF, PF, PAN, PA, PC, PE, HDPE, LDPE, PETP, PMMA, PP, PS, SB, PUR, PVC, RF, SAN, PP-EPDM und UP (Kurzbezeichnungen nach DIN 7728T1), vorzugsweise Polyolefine wie Polypropylen und Polypropylen-EPDM grundiert oder einschichtig lackiert werden. Die zu lackierenden Kunststoffe können selbstverständlich auch Polymerblends, modifizierte Kunststoffe oder faserverstärkte Kunststoffe sein. Die mit den wäßrigen Lacken gemäß dieser Erfindung grundierten Kunststoffe können problemlos, z.B. mit einschichtigen Uni- oder Metalleffektlackierungen oder mit zweischichtigen Uni- oder Metalleffektlackierungen des Basecoat-Clearcoat-Typs überlackiert werden.

Nachfolgend wird die Erfindung anhand von Ausführungsbeispielen näher erläutert. Dabei bedeuten alle Teile Gewichtsteile, sofern nicht ausdrücklich etwas anderes angegeben wird.

**1. Herstellung einer wäßrigen Dispersion eines erfindungsgemäßen Bindemittels**

150,0 Teile einer Mischung aus aromatischen Lösemitteln mit einem Siedebereich von 165 °C bis 185 °C (SHELLSOL® A) und 150,0 Teile eines statistischen Copolymers aus Proppylen und Ethylen mit einem Schmelzpunkt von 134°C (ASTM D 3418), einem Tropfpunkt nach Ubbelohde von 155°C (DIN 51801), einer Viskosität von 1600 $mm^2$/s (190°C, DIN 51562) und einem gewichtsmittleren Molekulargewicht von 37000 g/mol und einer Jodzahl von 0,015 mg J2/g werden in einem Polymerisationskessel aus Edelstahl mit Rührer, Rückflußkühler, einem Monomerenzulauf und einem Initiatorzulauf eingewogen und auf 145°C aufgeheizt. Die Mischung wird so lange bei dieser Temperatur gerührt, bis sie homogen ist. Danach wird eine Mischung aus 36,0 Teilen Di-tertiärbutylperoxid und 46,5 Teilen SHELLSOL® A innerhalb von 3 Stunden und 45 Minuten mit gleichbleibender Geschwindigkeit zu der homogenen Mischung zugetropft, wobei die Temperatur in der Reaktionsmischung bei 144 - 146°C gehalten wird. 15 Minuten nach Beginn der Zugabe der Di-tertiärbutylperoxidlösung wird eine Mischung aus 160,8 Teilen Butylmethacrylat, 169,2 Teilen Methylmethacrylat, 115,8 Teilen Ethylhexylacrylat, 115,8 Teilen Cyclohexylmethacrylat und 38,4 Teilen Acrylsäure innerhalb von 3 Stunden zugegeben. Nach Beendigung des Initiatorzulaufs wird noch für weitere 2 Stunden nachpolymerisiert. Dann wird so viel Lösemittel abdestilliert, bis eine Harzlösung mit einem Gehalt an nichtflüchtigen Bestandteilen von 95 Gew.-% erhalten wird. Diese Lösung wird anschließend mit Butylacetat 98/100 auf einen Gehalt an nichtflüchtigen Bestandteilen von 50 Gew.-% verdünnt und auf 110°C abgekühlt. Diese Lösung wird anschließend mit 44,9 Teilen Di-methylethanolamin versetzt und 30 Minuten lang gerührt. Anschließend werden bei 80°C 1.834,0 Teile entionisiertes Wasser unter Rühren zugegeben. Aus der so erhaltenen wässrigen Dispersion werden schließlich die organischen Lösmittel so lange abdestilliert, bis ein Restlösemittelgehalt von unter 5 Gew.-% erreicht worden ist. Die so erhaltene wässrige Dispersion weist einen Gehalt an nichtflüchtigen Anteilen von 30 Gew.-% (1 h/130°C), eine Säurezahl von 40 und einen pH-Wert von 8,2 auf.

**2. Verwendung der nach 1. hergestellten wäßrigen Dispersion zur Grundierung von Substraten aus PP/EPDM**

Die nach 1. hergestellte wäßrige Bindemitteldispersion wird mit entionisiertem Wasser auf eine Viskosität von 25 sec (DIN4-Becher) verdünnt und bei 23°C und 60% relativer Luftfeuchte mit einem Spritzdruck von 4-5 bar auf eine zuvor mit einem mit Isopropanol getränkten Papiertuch abgewischte PP/EPDM - Prüftafel (KELTAN TP 0550, DSM) so appliziert, daß eine Trockenfilm-Schichtdicke von 5 μm resultiert. Der Film wird 30 min bei 23°C abgelüftet. Anschließend wird ein lösemittelhaltiger Metallic-Basislack unter den oben genannten Bedingungen mit einer Trockenfilm-Schichtdicke von 15 μm appliziert. Nach 5 min Ablüftzeit bei 23°C wird ein lösemittelhaltiger Zweikomponenten-Klarlack unter den oben genannten Bedingungen mit einer Trockenfilm-Schichtdicke von 40 μm appliziert. Nach einer 15 Minuten dauernden Ablüftzeit bei 23°C wird die gesamte Lackierung bei 120°C Ofentemperatur 45 Minuten lang eingebrannt. Nach 12 Stunden Lagerung bei 50°C werden folgende Tests durchgeführt:

1. Gitterschnitt nach DIN 53151 mit anschließendem Klebebandabriß
0 = keine abgerissene Fläche,6 (= 100% abgerissene Fläche auch über die Gitterschnittquadrate hinaus).

2. Torsionshaftmessung mit dem Twist-o-Meter (Epprecht Instruments & Controls AG, Dottikon, Schweiz)
Hierzu wird der Lackaufbau mit feinem Sandpapier (Körnung.P400) angeschliffen. Dann werden fünf Alminiumstempel mit einem Zweikomponentenkleber (ARALDIT AW 2101 / ARALDIT HW 2951 = 1:0,75) auf der aufgerauhten Fläche aufgeklebt. Nach 48h bei 23°C und 50% relativer Luftfeuchte werden die Stempel mit einer Geschwindigkeit von 1 Umdrehung/Minute abgedreht. Die erforderliche Kraft zum Abdrehen des Lackfilms unter der Stempelfläche wird in $N/mm^2$ angegeben.

3. Feuchtebelastung

Eine beschichtete Tafel wird zwei Stunden lang in 70°C heißes, bewegtes und entionisiertes Wasser getaucht. Nach einer Stunde Regeneration bei 23°C wird die Haftung nach DIN 53151 und anschließendem Klebebandabriß bestimmt und die Veränderung der Lackoberfläche visuell ausgewertet.

Zum Vergleich wird das oben beschriebene Substrat nach einer wie oben beschriebenen Reinigung mit dem in Beispiel 1 der DE-A-42 39 695 beschriebenen wäßrigen Lack grundiert. Die so grundierten Tafeln werden 30 Minuten lang bei 80°C Ofentemperatur getrocknet und dann wie oben beschrieben überlackiert. Die Prüfung der so erhaltenen Lackierungen wird wie oben beschrieben durchgeführt.

Die Ergebnisse der Prüfungen sind in folgender Tabelle zusammengefaßt:

| | Beispiel (erfindungs-gemäß) | Vergleich |
|---|---|---|
| Gitterschnitt | 0-1 | 6 |
| Torsionsmessung [N/mm$^2$] | 8,5 | <= 0* |
| Gitterschnitt nach Heißwassertest (2h, 70°C) | 1-2 | wegen unzureichender Ausgangshaftung nicht bestimmt |

*: der Film delaminiert bereits bei der Probenbereitung

**Patentansprüche**

1. Wasserverdünnbare Bindemittel, dadurch gekennzeichnet, daß sie herstellbar sind, indem

(A) 20 bis 90 Gew.% einer Mischung aus

(a1) 3 bis 50 Gew.% Acrylsäure, Methacrylsäure oder einer Mischung aus Acrylsäure und Methacrylsäure und

(a2) 50 bis 97 Gew.% eines ethylenisch ungesättigten Monomeren oder einer Mischung aus ethylenisch ungesättigten Monomeren,

in Gegenwart von

(B) 9,9 bis 79,9 Gew.% eines halogenfreien Polyolefins oder einer Mischung aus halogenfreien Polyolefinen und

C) 0,1 bis 10 Gew.% eines Radikalbildners oder einer Mischung aus Radikalbildnern

radikalisch polymerisiert werden und das erhaltene Polymerisationsprodukt nach Neutralisation von mindestens 20% der in dem Polymerisationsprodukt enthaltenen Carboxylgruppen in Wasser dispergiert wird, wobei die Summe der Gewichtsprozentangaben für die Komponenten (A), (B) und (C) sowie (a1) und (a2) jeweils stets 100 Gew.% ergibt und die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 0 bis 150°C aufweist,

- 0,04 bis 1,0 Milliäquivalente einer oder mehrerer der folgenden funktionellen Gruppen enthält: -COOH, -OH, -NR$_3$, -CN, -CONH$_2$, -CO-, -NHCONH-, -OCONH-, -OPO$_3$H, -OSO$_3$H, -R-O-R- (wobei R für einen organischen Rest steht) und

- das zu 0 bis 50 Gew.% aus einer oder mehreren der folgenden cycloaliphatischen Gruppen, die mit mindestens einer Alkylgruppe, die 1 bis 12 C-Atome enthält, substituiert sein können, besteht: Cyclopentyl-, Cyclohexyl-, Perhydronaphthyl-, Perhydroanthracyl-, Perhydrophenanthryl-, Adamantyl-, Isobornyl-, Bicyclohexyl-, Bicycloheptyl-, Bicyclooctyl-, Bicyclononyl-, Bicyclodecyl-, Bicycloundecyl- und Bicyclododecylgruppe.

2. Wasserverdünnbare Bindemittel nach Anspruch 1, dadurch gekennzeichnet, daß die Komponente (A) in einer Menge von 55 bis 85 Gew% eingesetzt wird.

3. Wasserverdünnbare Bindemittel nach Anspruch 1 oder 2, dadurch gekennzeichnet, daß die Komponente (a1) in einer Menge von 5 bis 15 Gew% eingesetzt wird.

4. Wasserverdünnbare Bindemittel nach einem der Ansprüche 1 bis 3, dadurch gekennzeichnet, daß die Komponente (a2) in einer Menge von 85 bis 95 Gew% eingesetzt wird.

5. Wasserverdünnbare Bindemittel nach einem der Ansprüche 1 bis 4, dadurch gekennzeichnet, daß die Komponente (B) in einer Menge von 15 bis 45 Gew% eingesetzt wird.

6. Wasserverdünnbare Bindemittel nach einem der Ansprüche 1 bis 5, dadurch gekennzeichnet, daß die Komponente (C) in einer Menge von 1 bis 7 Gew% eingesetzt wird.

7. Wasserverdünnbare Bindemittel nach einem der Ansprüche 1 bis 6, dadurch gekennzeichnet, daß die Zusammensetzung der Mischung aus (a1) und (a2) so ausgewählt wird, daß bei alleiniger Polymerisation der Mischung aus (a1) und (a2) ein Polymer erhalten wird, das

- eine Glasübergangstemperatur von 10 bis 80°C aufweist,

- 0,1 bis 0,5 Milliäquivalente einer oder mehrerer der folgenden funktionellen Gruppen enthält: -COOH, -CN, -CNH$_2$ und -R-O-R- und

- das zu 5 bis 25 Gew.% aus Cyclohexylgruppen oder Isobornylgruppen oder einer Mischung aus diesen Gruppen besteht.

8. Wäßrige Lacke, dadurch gekennzeichnet, daß sie mindestens ein wasserverdünnbares Bindemitel nach einem der Ansprüche 1 bis 7 enthalten

9. Verfahren zur Grundierung oder einschichtigen Lackierung von Substraten aus Kunststoff, bei dem ein wäßriger Lack auf das Kunststoffsubstrat appliziert wird, dadurch gekennzeichnet, daß ein wäßriger Lack nach einem der Ansprüche 1 bis 8 auf das Kunststoffsubstrat appliziert wird.

10. Verfahren nach Anspruch 9, dadurch gekennzeichnet, daß das Kunststoffsubstrat aus Polypropylen ist.

## Claims

1. Water-dilutable binders, characterized in that they can be prepared by subjecting

(A) from 20 to 90% by weight of a mixture of

(a1) from 3 to 50% by weight of acrylic acid, methacrylic acid or a mixture of acrylic acid and methacrylic acid, and

(a2) from 50 to 97% by weight of an ethylenically unsaturated monomer or a mixture of ethylenically unsaturated monomers,

in the presence of

(B) from 9.9 to 79.9% by weight of a halogen-free polyolefin or a mixture of halogen-free polyolefins, and

(C) from 0.1 to 10% by weight of a free radical initiator or a mixture of free radical initiators

to free-radical polymerization and, after neutralization of at least 20% of the carboxyl groups contained in the resulting polymerization product, dispersing the polymerization product in water, the sum of the percentages by weight of components (A), (B) and (C) and (a1) and (a2) in each case always being 100% by weight and the composition of the mixture of (a1) and (a2) being selected such that a polymer resulting from the polymerization of the mixture of (a1) and (a2) alone

- has a glass transition temperature of from 0 to 150°C,

- contains from 0.04 to 1.0 milliequivalents of one or more of the following functional groups: -COOH, -OH, -NR$_3$, -CN, -CONH$_2$, -CO-, -NHCONH-, -OCONH-, -OPO$_3$H, -OSO$_3$H and -R-O-R- (where R is an organic radical), and

- consists to the extent of from 0 to 50% by weight of one or more of the following cycloaliphatic groups which may be substituted by at least one alkyl group containing from 1 to 12 carbon atoms: cyclopentyl, cyclohexyl, perhydronaphthyl, perhydroanthracyl, perhydrophenanthryl, adamantyl, isobornyl, bicyclohexyl, bicycloheptyl, bicyclooctyl, bicyclononyl, bicyclodecyl, bicycloundecyl and bicyclododecyl group.

2. Water-dilutable binders according to Claim 1, characterized in that component (A) is employed in a quantity of from 55 to 85% by weight.

3. Water-dilutable binders according to Claim 1 or 2, characterized in that component (a1) is employed in a quantity of from 5 to 15% by weight.

4. Water-dilutable binders according to one of Claims 1 to 3, characterized in that component (a2) is employed in a quantity of from 85 to 95% by weight.

5. Water-dilutable binders according to one of Claims 1 to 4, characterized in that component (B) is employed in a quantity of from 15 to 45% by weight.

6. Water-dilutable binders according to one of Claims 1 to 5, characterized in that component (C) is employed in a quantity of from 1 to 7% by weight.

7. Water-dilutable binders according to one of Claims 1 to 6, characterized in that the composition of the mixture of (a1) and (a2) is selected such that a polymer resulting from the polymerization of the mixture of (a1) and (a2) alone

- has a glass transition temperature of from 10 to 80°C,

- contains from 0.1 to 0.5 milliequivalents of one or more of the following functional groups: -COOH, -CN, -CNH$_2$ and -R-O-R-, and

- consists to the extent of from 5 to 25% by weight of cyclohexyl groups or isobornyl groups or a mixture of these groups.

8. Aqueous coating materials, characterized in that they contain at least one water-dilutable binder according to one of Claims 1 to 7

9. Process for the priming or single-layer coating of substrates made of plastic, in which an aqueous coating material is applied to the plastics substrate, characterized in that an aqueous coating material according to one of Claims 1 to 8 is applied to the plastics substrate.

10. Process according to Claim 9, characterized in that the plastics substrate is made of polypropylene.


**Revendications**

1. Liants diluables dans l'eau, caractérisés en ce que l'on peut les préparer en procédant à la polymérisation radicalaire

   (A) de 20 à 90 % en poids d'un mélange

       (a1) de 3 à 50 % en poids d'acide acrylique, d'acide méthacrylique, ou d'un mélange d'acide acrylique et d'acide méthacrylique et

       (a2) de 50 à 97 % en poids d'un monomère éthyléniquement insaturé, ou d'un mélange de monomères éthyléniquement insaturés,

   en présence de

   (B) de 9,9 à 79,9 % en poids d'une polyoléfine exempte d'halogène, ou d'un mélange de polyoléfines exemptes d'halogène et

   (C) de 0,1 à 10 % en poids d'un agent formateur de radicaux, ou d'un mélange d'agents formateurs de radicaux, et

   en procédant à la dispersion dans l'eau du produit de polymérisation obtenu, après neutralisation d'au moins 20 % des groupements carboxyle contenus dans le produit de polymérisation, la somme des indications de pourcentage en poids pour les composants (A), (B), et (C) ainsi que (a1) et (a2) donnant à chaque fois 100 % en poids, et la composition du mélange de (a1) et de (a2) étant choisie de telle sorte que, lors d'une polymérisation individuelle du mélange de (a1) et de (a2), l'on obtienne un polymère

   - qui présente une température de transition vitreuse de 0 à 150°C,

   - qui contient de 0,04 à 1,0 milliéquivalent d'un ou de plusieurs des groupements fonctionnels suivants: -COOH, -OH, -NR$_3$, -CN, -CONH$_2$, -CO-, -NHCONH-, -OCONH-, -OPO$_3$H, -OSO$_3$H, -R-O-R- (R désignant un résidu organique), et

   - qui se compose de 0 jusqu'à 50 % en poids d'un ou de plusieurs des groupements cycloaliphatiques suivants, qui peuvent être substitués par au moins un groupement alkyle contenant de 1 à 12 atomes de C: les groupements cyclopentyle, cyclohexyle, perhydronaphtyle, perhydroanthracyle, perhydrophénanthryle, adamantyle, isobornyle, bicyclohexyle, bicycloheptyle, bicyclo-octyle, bicyclononyle, bicyclodécyle, bicycloundécyle et bicyclododécyle.

2. Liants diluables dans l'eau selon la revendication 1, caractérisés en ce que l'on utilise le composant (A) dans une quantité de 55 à 85 % en poids.

3. Liants diluables dans l'eau selon la revendication 1 ou 2, caractérisés en ce que l'on utilise le composant (a1) dans une quantité de 5 à 15 % en poids.

4. Liants diluables dans l'eau selon l'une quelconque des revendications 1 à 3, caractérisés en ce que l'on utilise le composant (a2) dans une quantité de 85 à 95 % en poids.

5. Liants diluables dans l'eau selon l'une quelconque des revendications 1 à 4, caractérisés en ce que l'on utilise le composant (B) dans une quantité de 15 à 45 % en poids.

6. Liants diluables dans l'eau selon l'une quelconque des revendications 1 à 5, caractérisés en ce que l'on utilise le composant (C) dans une quantité de 1 à 7 % en poids.

7. Liants diluables dans l'eau selon l'une quelconque des revendications 1 à 6, caractérisés en ce que la composition du mélange de (a1) et de (a2) est choisie de sorte que, lors d'une polymérisation individuelle du mélange de (a1) et de (a2), l'on obtienne un polymère

- qui présente une température de transition vitreuse de 10 à 80°C,

- qui contient de 0,1 à 0,5 milliéquivalent d'un ou de plusieurs des groupements fonctionnels suivants: -COOH, -CN, $-CNH_2$ et -R-O-R- et

- qui se compose de 5 jusqu'à 25 % en poids de groupements cyclohexyle ou de groupements isobornyle ou d'un mélange de ces groupements.

8. Peintures aqueuses, caractérisées en ce qu'elles contiennent au moins un liant diluable dans l'eau selon l'une quelconque des revendications 1 à 7.

9. Procédé d'application d'une couche de fond ou d'application d'une seule couche de peinture sur des substrats en matière plastique, lors duquel on procède à l'application sur le substrat en matière plastique d'une peinture aqueuse, caractérisé en ce que l'on procède à l'application, sur le substrat en matière plastique, d'une peinture aqueuse selon l'une quelconque des revendications 1 à 8.

10. Procédé selon la revendication 9, caractérisé en ce que le substrat en matière plastique est en polypropylène.